# EUROPÄISCHE PATENTSCHRIFT

(11) **EP 2 994 723 B1**
(45) Veröffentlichungstag und Bekanntmachung des Hinweises auf die Patenterteilung: **20.09.2017**
(21) Anmeldenummer: 14723410.8
(22) Anmeldetag: 07.05.2014
(51) Int. Cl.: G01D 11/24

(54) **ABTASTKOPF FÜR EINEN GEBER**
SCANNING HEAD FOR AN ENCODER
TÊTE DE BALAYAGE POUR UN CAPTEUR

(30) Priorität: 07.05.2013 EP 13166894
(43) Veröffentlichungstag der Anmeldung: 16.03.2016
(73) Patentinhaber: Baumer Hübner GmbH, 10589 Berlin (DE)
(72) Erfinder: HILLER, Bernhard, 13465 Berlin (DE); LOHARENS, Axel, 13189 Berlin (DE); PFEFFER, Armin, 14513 Teltow (DE); WEISS, Michael, 13503 Berlin (DE)
(74) Vertreter: Strauss, Steffen
(86) Internationale Anmeldenummer: PCT/EP2014/059295
(87) Internationale Veröffentlichungsnummer: WO 2014/180879

(56) Entgegenhaltungen:
- EP-A1- 0 560 381
- EP-A1- 2 660 567
- EP-A2- 0 800 087
- EP-A2- 2 455 721
- DE-A1-102005 056 207
- DE-A1-102007 022 765

## Beschreibung

Die Erfindung betrifft einen Abtastkopf für einen Geber zur Erfassung von Rotations- bzw. Linearparametern, beispielsweise Position, Geschwindigkeit oder Beschleunigung, eines drehbaren oder linear bewegbaren Bauelementes, insbesondere einer Welle oder einer linearen Strecke.

Um beispielsweise die Rotationsposition eines drehbaren Bauelementes festzustellen, wird in vielen Fällen eine Maßverkörperung an dem drehbaren Bauelement angebracht, die einer Sensorfläche einer Sensoreinrichtung gegenüberliegt und die von einer Sensorfläche abgetastet wird. Neuere Systeme, wie sie beispielsweise aus der DE 10 2010 061 738 bekannt sind, benutzen dabei eine Maßverkörperung, die sich nicht über die kompletten 360° einer Umdrehung erstreckt und zwischen ihren Enden eine Lücke bildet. Um diese Lücke zu überbrücken, ist es notwendig, zwei oder mehr Sensorflächen, deren Abstand voneinander größer als die Lücke ist, zur Positionsermittlung zu benutzen. Eine Lücke innerhalb der Maßverkörperung ist auch bei linearen Messsystemen häufig anzutreffen, da die Maßverkörperungen oft nicht entsprechend lang herstellbar, oder transportierbar sind. Auch bei anderen Messsystemen, beispielsweise bei solchen, die mit Nonius oder zusätzlichen Pseudo-Random-Code-Spuren arbeiten, kann es notwendig sein, dass mindestens zwei in einer Umfangsrichtung des drehbaren Bauelements oder in der Verfahrrichtung eines linear bewegbaren Bauelements versetzt angeordnete Sensorflächen vorhanden sind. DE 10 2005 056207 A1 bezieht sich auf ein Sensorsystem, welches zur Lagebestimmung eines Rotationskörper oder auch zur Winkel- und Drehzahlerfassung einer elektrischen Maschine einsetzbar ist. Sehr große drehbare Bauelemente werden üblicherweise nur als Einzelstücke oder nur in kleinen Serien gefertigt. In solchen Fällen werden die Abtastköpfe für jeden Durchmesser des drehbaren Bauelements einzeln maßgefertigt. Dies stellt einen großen Aufwand dar. Die Aufgabe der Erfindung ist es, einen Abtastkopf mit einem verringerten Herstellungsaufwand und einer einfachen Handhabung bereitzustellen.

Die Aufgabe wird dadurch gelöst, dass ein Abtastkopf nach Anspruch 1 bereitgestellt wird, der sich an Wellen oder andere drehbare Bauelemente mit verschieden großen Durchmessern und/oder an linear bewegbare Bauelemente mit geringem Aufwand anpassen lässt. Dazu sind eine an einem Gehäuse angeordnete erste und eine zweite Sensoreinrichtung mit jeweils einer ersten und zweiten Sensorfläche in mindestens zwei unterschiedlichen Winkelstellungen der Sensorflächen zueinander am Gehäuse anordenbar. Die Sensoreinrichtungen sind jeweils um eine Drehachse drehbar ausgeführt, so dass die Sensorflächen in mindestens zwei unterschiedlichen Winkelstellungen zueinander schwenkbar sind, wobei sich die Drehachsen der Sensoreinrichtungen an den die Sensorflächen bildenden Seiten der Sensoreinrichtungen befinden.

Der Vorteil einer solchen Ausgestaltung ist, dass die Sensorflächen bei dem Verschwenk- bzw. Drehvorgang den Abstand voneinander relativ wenig verändern. Beim Abtasten verschieden großer Wellen ändert sich der Abstand entlang der Umfangsrichtung also vergleichsweise wenig.

Der erfindungsgemäß ausgestaltete Abtastkopf ermöglicht ohne Austausch von Teilen die Messung an mindestens zwei verschieden großen Durchmessern und/oder die Messung an einer linearen Strecke, indem die Winkelstellung der Sensorflächen je nach Bedarf eingestellt wird. Sind die Sensorflächen stärker zueinander geneigt, schließen sie einen kleineren Winkel zwischen sich ein und sind zur Messung an kleineren Durchmessern geeignet. Zur Messung an größeren Durchmessern ist der Winkel zwischen den beiden Sensorflächen größer. Soll eine lineare Strecke gemessen werden, sollten die Sensorflächen parallel und miteinander fluchtend ausgerichtet sein.

Im Folgenden werden jeweils für sich vorteilhafte Weiterentwicklungen und Ausgestaltungen beschrieben, die beliebig miteinander kombiniert werden können.

Die erste und/oder die zweite Sensorfläche sind in vorteilhafter Weise schwenkbar am Gehäuse angeordnet, angebracht oder befestigt. Durch die schwenkbare Ausgestaltung kann die Ausrichtung der Sensorfläche in mehreren Stufen oder kontinuierlich an unterschiedliche Durchmesser des drehbaren Bauelements angepasst werden. Die Ausrichtung der Sensorflächen kann folglich so erfolgen, dass stets die maximale Sensorfläche von der vorbeibewegten Maßverkörperung erfasst wird bzw. der Luftspalt zwischen den jeweiligen Sensorflächen und der Maßverkörperung, die auf dem drehbaren Bauelement bzw. dem linearen Bauelement angebracht ist, optimal ist.

In einer bevorzugten Ausführung liegen die Drehachsen innerhalb des Gehäuses.

In einer weiteren Ausführung umfasst das Gehäuse eine Stirnseite, wobei die Sensorflächen zumindest teilweise in dieselbe Richtung weisen wie die Stirnseite und der Stirnseite vorgelagert sind, wobei sich die Sensoreinrichtungen zwischen den Sensorflächen und der Stirnseite befinden. Die Drehachsen können an oder vor der Stirnseite des Gehäuses liegen.

In einer weiteren Ausführung ist jeweils eine schlitzförmige Ausnehmung an den Sensoreinrichtungen vorgesehen, so dass die Sensoreinrichtungen innerhalb eines kontinuierlichen Bereichs schwenkbar sind. Vorteilhafterweise ist also nicht nur die Anordnung von erster und zweiter Sensorfläche in zwei unterschiedlichen Winkelstellungen, sondern in einer beliebigen Winkelstellung innerhalb eines kontinuierlichen Bereichs möglich. Dadurch kann der Abtastkopf nicht nur für zwei unterschiedliche Durchmesser, sondern für Durchmesser in einem kontinuierlichen Bereich verwendet werden.

Über die an den Außenseiten der Sensoreinrichtungen vorgesehene schlitzförmige Ausnehmung die über Befestigungsmittel mit dem Gehäuse verbunden werden können, lassen sich dann die Sensoreinrichtungen und damit die Sensorflächen an verschiedene Durchmesser anpassen.

Der Abtastkopf kann eine Fixiereinrichtung aufweisen, die eine Fixierung von erster und zweiter Sensoreinrichtung in den mindestens zwei Winkelstellungen der Sensorflächen zueinander ermöglicht. Eine Änderung der Winkelstellung kann bei einer Fixiereinrichtung nur erfolgen, wenn die Fixiereinrichtung in einer Löseposition ist.

In einer vorteilhaften Variante ragt die Fixiereinrichtung durch die schlitzförmige Ausnehmung. Beispielsweise kann eine Schraube als Fixiereinrichtung dienen, welche durch die schlitzförmige Ausnehmung ragt. Wenn die Schraube angezogen ist, kann die Sensoreinrichtung dadurch fixiert sein. Wenn die Schraube nicht angezogen ist, kann die Sensoreinrichtung bewegt werden.

Der Abtastkopf kann eine Halteeinrichtung aufweisen, die die erste und/oder die zweite Sensoreinrichtung in den mindestens zwei unterschiedlichen Winkelstellungen halten kann. Beispielsweise kann ein plastisch verformbares Element mit einer ausreichenden Stabilität, etwa ein Blech, verwendet werden, um eine oder beide Sensoreinrichtung zu halten.

Die Sensorflächen können plan sein. Alternativ können sie auch gekrümmt sein. Beispielsweise können sie leicht konvex sein, um nicht nur Messungen an Außenflächen, sondern auch an konkaven Innenflächen zu erlauben.

Die zwei Sensorflächen können in einer Ausgestaltung eine Normalenrichtung aufweisen, die senkrecht zur Rotationsachse des drehbaren Bauelementes beispielsweise der Welle verläuft. In dieser Ausgestaltung liegen die Sensorflächen bevorzugt radial beabstandet von und gegenüber einer Umfangsfläche der Welle bzw. einer Maßverkörperung eines linear bewegbaren Bauelements.

In einer anderen Ausgestaltung erfolgt die Abtastung axial, also mit axial von einer Stirnfläche des drehbaren Bauelementes beispielsweise der Welle beabstandeten bzw. der Stirnfläche gegenüberliegenden Sensorflächen. Bei dieser Ausgestaltung verläuft die Normalenrichtung der Sensorfläche parallel zur Rotationsachse des Bauelements. Die Winkelstellungen der zwei Sensorflächen unterscheiden sich wie bei der ersten Ausgestaltung in der Komponente, die tangential zur Bewegung eines Punktes auf dem drehbaren Bauelement verläuft.

Die Sensorfläche kann Teil einer Sensoreinrichtung sein, die zusätzlich zur Sensorfläche auch weitere Elemente, wie beispielsweise Schaltkreise zur Signalbearbeitung aufweisen kann. Die Sensoreinrichtung kann schwenkbar am Gehäuse angeordnet, angebracht oder befestigt sein.

Die erste und/oder die zweite Sensorfläche können mittelbar oder unmittelbar schwenkbar am Gehäuse angeordnet, angebracht oder befestigt sein. Eine mittelbare Anordnung wäre beispielsweise eine Anordnung über ein zwischen dem Gehäuse und der Sensorfläche liegendes, drittes Element.

In einer weiteren vorteilhaften Ausgestaltung ist eine der beiden Sensorflächen, beispielsweise die erste Sensorfläche unbeweglich am Gehäuse befestigt und die andere Sensorfläche, in diesem Beispiel die zweite Sensorfläche, beweglich angeordnet, z.B. schwenkbar am Gehäuse befestigt. Diese Ausgestaltung ist im Vergleich zur Ausgestaltung mit zwei schwenkbaren oder zwei beweglichen Sensorflächen einfacher zu fertigen.

Die Sensorflächen und/oder Sensoreinrichtung können unabhängig voneinander schwenkbar sein, so dass jede Sensorfläche für sich lageoptimiert werden kann.

In einer weiteren Ausgestaltung sind die erste und die zweite Sensorfläche schwenkbar miteinander gekoppelt. Die Anpassung der Sensorflächen an verschiedene Durchmesser ist dabei besonders einfach, da nur die eine oder die andere Sensorfläche eingestellt werden muss und die andere Sensorfläche automatisch richtig mitjustiert wird. Eine solche Ausgestaltung erfordert jedoch einen verhältnismäßig hohen Aufwand.

In einer weiteren Ausgestaltung können die beiden Sensorflächen und/oder Sensoreinrichtungen über ein elastisches Element, beispielsweise eine Blattfeder, miteinander verbunden sein, das in seiner Mitte mit dem Gehäuse verbunden ist.

Wie eingangs beispielhaft beschrieben, ist bei einigen Messsystemen die Verwendung von zwei Sensoreinrichtungen notwendig, um eine Lücke zwischen zwei Abschnitten der Maßverkörperung zu überbrücken. In diesem Fall sollte der Abstand zwischen den beiden Sensoreinrichtungen größer als die Lücke sein, so dass im Bereich der Lücke stets zumindest eine Sensoreinrichtung noch die Maßverkörperung abtastet. Bei anderen Messsystemen werden beide Sensoreinrichtungen immer gleichzeitig benutzt und die Positionsinformation aus der Kombination der beiden Sensoren gewonnen. Bei solchen Systemen kann es notwendig sein, dass der Abstand der beiden Sensoreinrichtungen entlang der Maßverkörperung einen vorbestimmten Wert aufweist. Dies ist der Fall, wenn mit Hilfe der beiden Sensoreinrichtungen zwei Signale durch die Abtastung der einen Verkörperung erzeugt werden sollen, die um einen bestimmten Phasenwinkel zueinander versetzt sind. Da sich bei verschiedenen Winkelstellungen die Abstände zwischen den Sensoreinrichtungen unterscheiden können, ist es besonders vorteilhaft, wenn sich die Sensoreinrichtungen in unterschiedlichem Abstand voneinander anordnen, anbringen oder befestigen lassen. Dadurch kann der Abstand in den verschiedenen Winkelstellungen richtig eingestellt werden.

Bei den Sensoreinrichtungen kann es sich um kontaktlos messende Sensoreinrichtungen handeln. Als Messverfahren können beispielsweise induktive, kapazitive, magnetische und/oder optische Verfahren zum Einsatz kommen. Die kontaktlose Messung verursacht weniger Verschleiß als eine Messung mit einem direkten Kontakt. In einer besonders vorteilhaften Ausgestaltung sind die Sensoreinrichtungen magnetisch messende Sensoreinrichtungen.

Neben der ersten und der zweiten Sensoreinrichtung kann noch eine dritte Sensoreinrichtung mit einer dritten Sensorfläche vorgesehen sein, um die Messung zu verbessern. Die dritte Sensorfläche muss dabei nicht bewegbar oder schwenkbar am Gehäuse angeordnet sein, was den Fertigungsaufwand verringert und den Justiervorgang beim Montieren des Abtastkopfes erleichtert. Die dritte Sensorfläche kann sich beispielsweise zwischen der ersten und der zweiten Sensorfläche befinden.

Um nicht nur die Rotation von Wellen, sondern auch eine lineare Bewegung messen zu können, ist es vorteilhaft, wenn die Sensorflächen in eine erste Winkelstellung überführbar sind, in der sie miteinander fluchten. In der ersten Winkelstellung liegen die beiden Sensorflächen in einer Ebene und parallel zueinander, so dass eine gerade beziehungsweise plane Maßverkörperung, wie sie beispielsweise an einem linear bewegbaren Bauelement angebracht sein kann, abgetastet werden kann. Die Sensorflächen können ferner in eine zweite Winkelstellung überführbar sein, in der sie nicht miteinander fluchten, so dass die Messung an beispielsweise einer Welle oder einem anderen Rotationskörper möglich ist.

Die zwei Sensoreinheiten können dieselbe Maßverkörperung abtasten. Dazu können die erste und die zweite Sensorfläche auf der gleichen, entlang einer Axialrichtung gemessenen Höhe liegen. Alternativ können die erste Sensorfläche und die zweite Sensorfläche verschiedene Maßverkörperungen abtasten, beispielsweise eine grob aufgelöste Maßverkörperung und eine fein aufgelöste Maßverkörperung.

Der Abtastkopf kann eine Signalverarbeitungselektronik umfassen, die die Signale der Sensoreinrichtungen aufnimmt und zumindest teilweise weiterverarbeitet. Aufbereitete Informationen können dann mit einer einzigen Datenleitung weitergegeben werden.

Im Folgenden ist die Erfindung anhand von Ausführungsbeispielen mit Bezug auf die Zeichnungen näher erläutert. Die bei den einzelnen Ausführungsbeispielen unterschiedlichen Merkmale können nach Maßgabe der obigen Ausführungen miteinander kombiniert werden. Außerdem können nach Maßgabe der obigen Darstellung auch einzelne Merkmale bei den Ausführungsbeispielen weggelassen werden, sollte es im speziellen Anwendungsfall auf den mit diesem Merkmal verbundenen Vorteil nicht ankommen.

Es zeigen:
- Fig. 1: eine schematische Ansicht eines erfindungsgemässen Abtastkopfes in einer ersten Ausführung;
- Fig. 2: eine schematische Ansicht eines Abtastkopfes zusammen mit einer Welle und einem auf der Welle angebrachten Spannband mit einer Maßverkörperung;
- Fig. 3: eine schematische Perspektivansicht eines Abtastkopfes zusammen mit einem Spannband;
- Fig. 4: einen schematischen Querschnitt eines Abtastkopfes zusammen mit einer Welle mit einem ersten Durchmesser;
- Fig. 5: einen schematischen Querschnitt eines Abtastkopfes zusammen mit einer Welle mit einem zweiten Durchmesser;
- Fig. 6: eine schematische Ansicht eines Abtastkopfes, der zur Messung der Bewegung einer ebenen Fläche ausgestaltet ist;
- Fig. 7: einen schematischen Querschnitt eines Abtastkopfes zur inneren Abtastung einer Hohlwelle;
- Fig. 8: eine schematische Ansicht eines Abtastkopfes zur axialen Abtastung der Rotation einer Welle mit einem ersten Durchmesser;
- Fig. 9: eine schematische Ansicht eines Abtastkopfes zur axialen Abtastung der Rotation einer Welle mit einem zweiten Durchmesser;
- Fig. 10: eine schematische Ansicht eines Abtastkopfes zur axialen Abtastung der Rotation einer Welle mit mehreren Maßverkörperungen.
- Fig. 11: eine schematische Perspektivansicht eines weiteren Abtastkopfes, der für eine Außenabtastung einer Welle eingestellt ist;
- Fig. 12: eine schematische Perspektivansicht des Abtastkopfes aus Fig. 10, eingestellt auf eine Innenabtastung einer Hohlwelle;
- Fig. 13: eine schematische Perspektivansicht von Teilen eines erfindungsgemäßen Abtastkopfes;
- Fig. 14: eine schematische Perspektivansicht des Abtastkopfes aus Fig. 13 eingestellt auf eine Außenabtastung einer Welle;
- Fig. 15: eine schematische Perspektivansicht des Abtastkopfes aus Fig. 14, eingestellt auf eine Innenabtastung einer Hohlwelle;
- Fig. 16: eine schematische Perspektivansicht des Abtastkopfes aus den Figuren 13 bis 15;
- Fig. 17: eine schematische Ansicht von oben auf den Abtastkopf aus den Figuren 13 bis 16 und
- Fig. 18: eine schematische Perspektivansicht zweier Abtastköpfe gemäß den Figuren 13 bis 17, die eine Maßverkörperung außen bzw. innen abtasten.

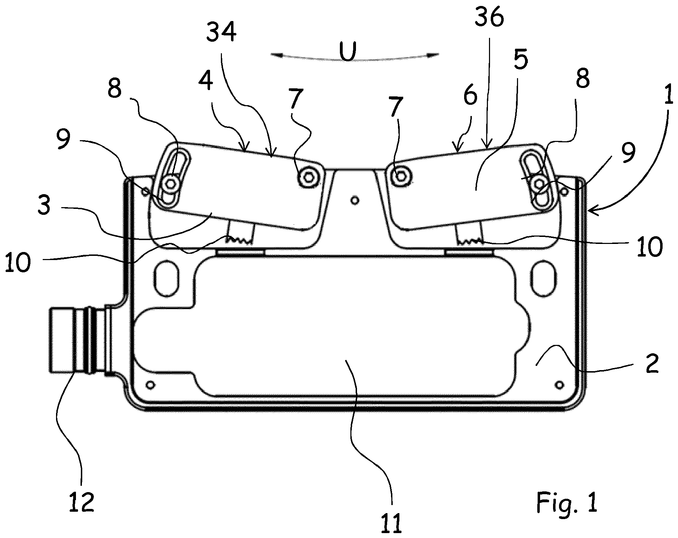

Fig. 1 zeigt eine schematische Ansicht eines Abtastkopfes 1 mit einem Gehäuse 2 sowie einer ersten, am Gehäuse 2 angeordneten Sensoreinrichtung 3 mit einer ersten Sensorfläche 4 und einer zweiten, am Gehäuse 2 angeordneten, in einer Umfangsrichtung U einer Welle oder eines anderen drehbaren Bauteils (nicht gezeigt) zur ersten Sensoreinrichtung 3 versetzt angeordneten Sensoreinrichtung 5 mit einer zweiten Sensorfläche 6.

Die beiden Sensorflächen 4, 6 liegen zur Bestimmung der Winkelposition einer Maßverkörperung gegenüber und tasten diese ab. Eine Sensorfläche 4, 6 kann eine Vorzugsrichtung definieren, entlang der die Messung besonders effizient ist. Eine solche Vorzugsrichtung kann etwa senkrecht zur Ausdehnung der Sensorfläche 4, 6 sein. Die beiden Sensorflächen 4, 6 sind in Umfangsrichtung U zueinander versetzt und so zueinander geneigt, dass die jeweilige Vorzugsrichtung auf die Rotationsachse des drehbaren Bauelement gerichtet ist. Um eine Messung an drehbaren Bauelementen mit verschiedenen Durchmessern und/oder an einem linear bewegbaren Bauelement zu ermöglichen, lassen sich die Sensorflächen 4, 6 in mindestens zwei Winkelstellungen zueinander anordnen.

Die erste und die zweite Sensoreinrichtung 3, 5 sind jeweils über eine Achse 7 schwenkbar am Gehäuse 2 befestigt, so dass die Sensorflächen 4, 6 in mindestens zwei unterschiedlichen Winkelstellungen zueinander schwenkbar sind. Die Drehachsen 7 der Sensoreinrichtungen 3 und 5 befinden sich hierbei an den die Sensorflächen 4 und 6 bildenden Seiten 34 und 36 der Sensoreinrichtungen 3 und 5.

Die schlitzförmigen Ausnehmungen 8 an den Sensoreinrichtungen 3, 5 ermöglichen dabei, dass die Sensoreinrichtungen 3, 5 innerhalb eines kontinuierlichen Bereichs schwenkbar sind. Jede der beiden Sensoreinrichtungen 3, 5 verfügt über eine Fixiereinrichtung 9 beispielsweise in Form einer Schraube, die durch die schlitzförmige Ausnehmung 8 ragt und die Sensoreinrichtung 3 beziehungsweise 5 fixiert. Der hier gezeigte Abtastkopf 1 ermöglicht also eine Fixierung von erster und zweiter Sensorfläche 4, 6 unabhängig voneinander in einer beliebigen Winkelstellung zueinander innerhalb eines kontinuierlichen Bereichs. Der so ausgestaltete Abtastkopf 1 kann an verschiedene Wellendurchmesser angepasst werden. Alternativ zur dargestellten Ausgestaltung könnten schlitzförmige Ausnehmungen am Gehäuse 2 vorhanden sein, um eine Verschwenkung zu ermöglichen.

Die beiden Sensoreinrichtungen 3, 5 verfügen neben den Sensorflächen 4, 6 noch jeweils über eine Sensorelektronik (nicht gezeigt) im Inneren der Sensoreinrichtung 3, 5. Die Sensoreinrichtungen 3, 5 sind mit nur schematisch angedeuteten Verbindungselementen 10 mit einer Signalverarbeitungselektronik (nicht gezeigt) in einem Hohlraum 11 des Abtastkopfes 1 verbunden. Diese Signalverarbeitungselektronik kann beispielsweise dazu dienen, die Sensorsignale weiter zu verarbeiten und schon ein fertiges Positionssignal, und/oder Geschwindigkeitssignal und/oder Beschleunigungssignal auszugeben, das über den Ausgang 12 ausgegeben wird.

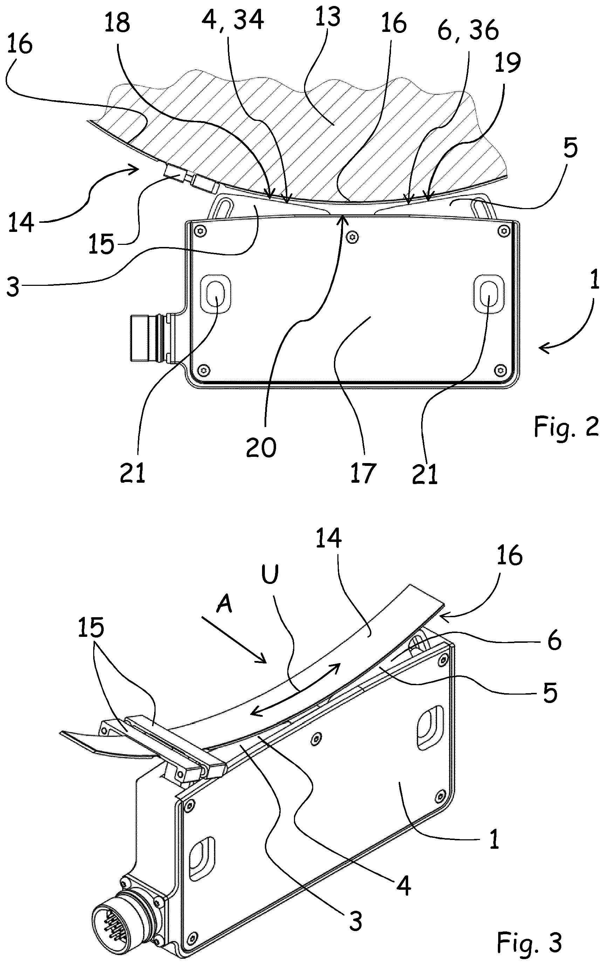

In Fig. 2 ist ein Abtastkopf 1 zusammen mit einem Spannband 14 gezeigt. Das Spannband 14 wird mittels eines Spannschlosses 15 auf die Welle 13 gespannt, wodurch es fest am Umfang der Welle 13 anliegt. Außerhalb des Bereichs des Spannschlosses 15 verfügt das Spannband 14 über eine Maßverkörperung 16. In diesem Fall handelt es sich um eine magnetische Maßverkörperung 16, die von den magnetisch messenden Sensoreinrichtungen 3, 5 erfasst wird. Um die durch das Spannschloss 15 verursachte, zum Spannen notwendige Lücke zwischen den Bereichen mit der Maßverkörperung zu überbrücken, verfügt der Abtastkopf 1 über zwei Sensoreinrichtungen 3, 5, sodass immer mindestens eine Sensoreinrichtung 3, 5 die Maßverkörperung 16 erfassen und messen kann.

Die beiden in der Fig. 1 gezeigten Fixiereinrichtungen 9 der Sensoreinrichtungen 3, 5 sind hier von einer Abdeckung 17 abgedeckt, wodurch ein unbeabsichtigtes Verstellen der Winkelstellung der beiden Sensorflächen 4, 6 verhindert ist.

Die zur Welle 13 hin zeigenden Außenflächen 18, 19 der Sensoreinrichtungen 3, 5 und die zur Welle 13 hin zeigende Außenfläche 20 des Abtastkopfes 1 sind leicht konvex ausgestaltet, so dass eine Anbringung an verschieden großen Wellen möglich ist. Durch die konvexe Ausgestaltung ist es zusätzlich möglich, die Sensorflächen 4, 6 so anzuordnen, dass sie miteinander fluchten, wodurch nicht nur die Rotationsbewegung einer Welle, sondern auch eine lineare Bewegung einer ebenen Fläche erfasst werden kann. Sogar die Anbringung im Inneren einer großen Hohlwelle ist durch diese Ausgestaltung möglich.

Zur Befestigung und zur Justierung des Abtastkopfes 1 verfügt dieser über zwei Langlöcher 21, in die Befestigungselemente, beispielsweise Schrauben, einführbar sind.

In Fig. 3 ist ein erfindungsgemäßer Abtastkopf 1 in einer perspektivischen Ansicht gezeigt. Die beiden Sensorflächen 4, 6 der ersten beziehungsweise zweiten Sensoreinrichtung 3, 5 liegen auf der gleichen, entlang einer Axialrichtung A der Welle 13 gemessenen Höhe. Beide Sensorflächen 4, 6 erfassen die gleiche, in dem Spannband 14 angeordnete Maßverkörperung 16. In diesem Fall handelt es sich um eine magnetische Maßverkörperung 16. Die Sensoreinrichtungen 3, 5 sind also kontaktlos messende, in diesem Fall magnetisch messende Sensoreinrichtungen 3, 5. Die Messung erfolgt praktisch verschleißfrei.

Alternativ könnten die beiden Sensorflächen 4, 6 auch entlang der Axialrichtung A der Welle 13 versetzt angeordnet sein und verschiedene Maßverkörperungen erfassen. Beispielsweise könnte die erste Sensorfläche 4 eine Grobeinteilung erfassen, während die zweite Sensorfläche 6 eine Feineinteilung erfasst.

Bei manchen Messmethoden kann es notwendig sein, dass zwischen der ersten Sensorfläche 4 und der zweiten Sensorfläche 6 ein bestimmter Abstand entlang der Umfangsrichtung U besteht. In einer vorteilhaften Ausgestaltung lässt sich daher der Abstand der beiden Sensorflächen 4, 6 verstellen, beispielsweise indem die Sensoreinheiten in unterschiedlichem Abstand voneinander anordenbar, anbringbar oder befestigbar ausgestaltet sind.

Die in den Fig. 1 bis 3 gezeigten Sensoreinrichtungen 3, 5 sind unabhängig voneinander schwenkbar. Dadurch ist es möglich, dass der Abtastkopf 1 relativ zur Welle 13 in einem vergleichsweise breiten Bereich anordenbar ist. In der Fig. 2 könnte der Abtastkopf 1 auch weiter links oder weiter rechts angeordnet sein. Um diesen Versatz auszugleichen, müsste eine der beiden Sensoreinrichtungen 3 oder 5 und damit die eine Sensorfläche 4 oder 6 weiter nach innen und die andere Sensoreinheit 5 bzw. 3 mit der anderen Sensorfläche 6 bzw. 4 weiter nach außen verschwenkt werden.

Alternativ könnten die beiden Sensoreinrichtungen 3, 5 und damit die beiden Sensorflächen 4, 6 schwenkbar miteinander gekoppelt sein, beispielsweise über ein Getriebe (nicht gezeigt) oder über Einzelantriebe. Eine solche Ausgestaltung würde die Anpassung an den Wellendurchmesser vereinfachen, da nur eine Sensoreinrichtung 3 oder 5 justiert werden müsste und die andere Sensoreinrichtung 5 bzw. 3 automatisch richtig mitjustiert werden würde. Allerdings wäre es dazu notwendig, dass die Relativposition zwischen dem Abtastkopf 1 und der Welle 13 vergleichsweise genau festgelegt ist.

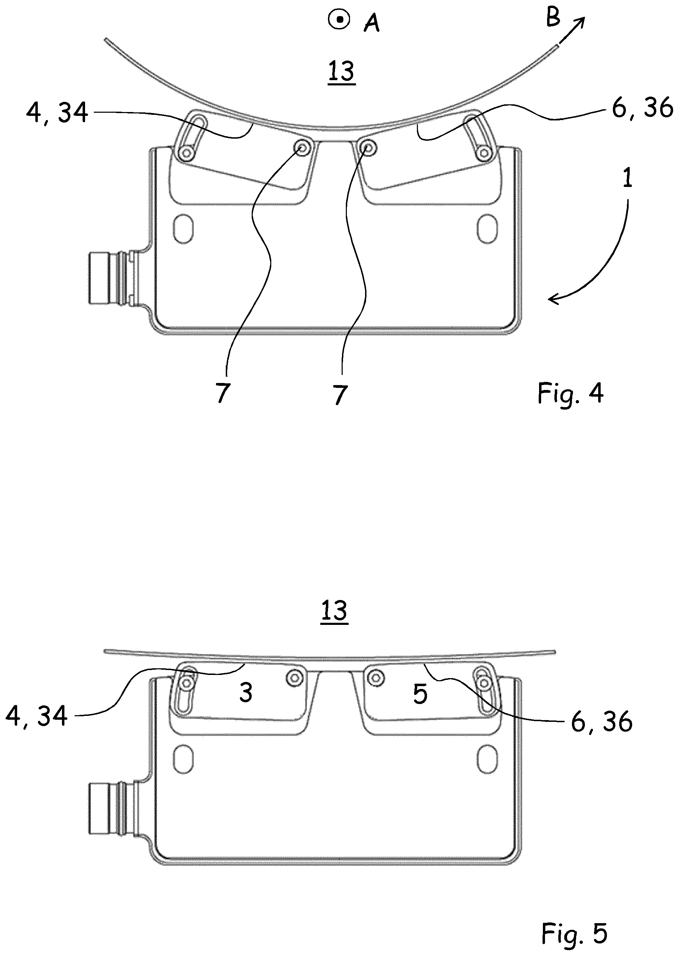

In den Fig. 4 bis 18 sind verschiedene Messmöglichkeiten erfindungsgemäßer Abtastköpfe 1 dargestellt.

In Fig. 4 wird am Außenumfang einer Welle 13 gemessen. Dadurch, dass sich die beiden Sensorflächen 4, 6 in verschiedenen Winkelstellungen anordnen lassen, sind Messungen an verschieden großen Wellen 13 möglich.

Die Messung in Fig. 4 erfolgt tangential. Die beiden Sensorflächen 4, 6 erstrecken sich in einer Richtung, die tangential zur Bewegungsrichtung B der Rotation eines Punktes auf der Außenfläche der Welle 13 verläuft. Zusätzlich erstrecken sich die Sensorflächen 4, 6 in einer Richtung, die parallel zur Axialrichtung A der Welle 13 verläuft. Die beiden Sensorflächen 4, 6 sind dabei jeweils um eine Achse 7 schwenkbar. Die Drehachsen 7 erlauben eine Schwenkbewegung um die Axialrichtung A der Welle 13. In den verschiedenen Winkelstellungen weisen die Sensorflächen 4 und 6 verschieden große Zwischenwinkel auf. Bei Messung an einer Welle fluchten die beiden Sensorflächen 4 und 6 also nicht. In Fig. 4 ist eine Messung an einer Welle mit einem vergleichsweise kleinen Durchmesser zu sehen.

In Fig. 5 ist eine Messung an einer Welle 13, deren Durchmesser im Vergleich zu der Welle in Fig. 4 groß ist, zu sehen. Die Sensorflächen 4 bzw. 6 der Sensoreinrichtungen 3 bzw. 5 weisen eine andere Winkelstellung als in Fig. 4 auf.

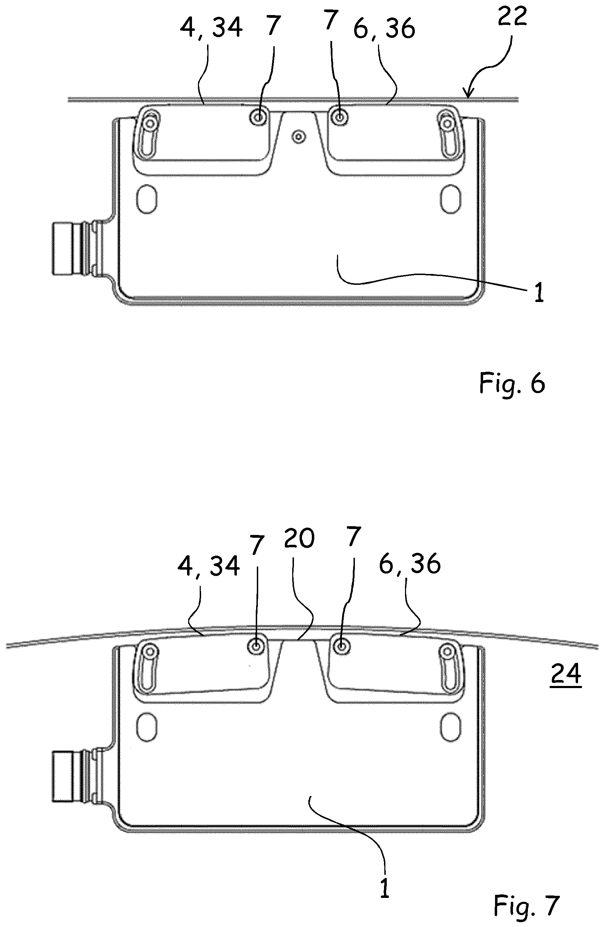

In Fig. 6 ist der Abtastkopf 1 in einer Winkelstellung gezeigt, in der die beiden Sensorflächen 4, 6 miteinander fluchten. Dadurch ist es möglich, die Bewegung einer ebenen Fläche 22, die beispielsweise zu einem linear bewegbaren Bauelement gehören kann, zu messen.

In Fig. 7 ist gezeigt, wie der Abtastkopf 1 zur Messung einer Rotation einer Hohlwelle 24 an einer Innenseite der Hohlwelle 24 benutzt wird. Durch die konvexe Ausgestaltung der Außenfläche 20 des Abtastkopfes 1 ist es möglich, auch an einer Innenfläche der Hohlwelle 24 zu messen. Dazu werden die Sensorflächen 4, 6 zum Rest des Abtastkopfes 1 hin verschwenkt. Bei der in Fig. 7 dargestellten Messung handelt es sich, wie bei der Messung in den Fig. 4, um eine tangentiale Messung.

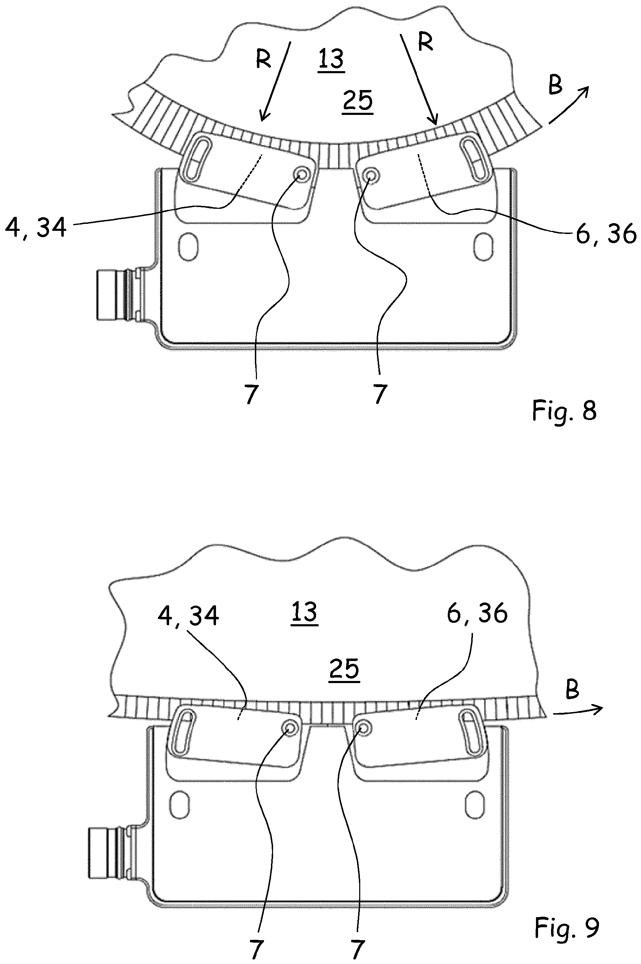

In Fig. 8 ist eine axiale Messung dargestellt. Bei dieser axialen Messung wird nicht an einer Außen- oder Innenfläche einer Welle 13, sondern an einer Stirnfläche 25 der Welle 13 gemessen. Die beiden Sensorflächen 4, 6 tasten eine Maßverkörperung 16 beispielsweise in Form einer Codespur, die auf der Stirnfläche 25 angeordnet ist, ab. Die beiden Sensorflächen 4, 6 zeigen zu der Stirnfläche 25 hin. Sie erstrecken sich entlang einer Radialrichtung R der Welle 13 und in einer Richtung, die tangential zur Bewegungsrichtung B der Rotation eines Punktes auf der Stirnfläche der Welle 13 verläuft. Sie liegen also parallel zu der Stirnfläche 25.

In Fig. 9 ist ebenfalls eine axiale Messung dargestellt. Die Winkelstellungen der verdeckten Sensorflächen 4, 6 unterscheiden sich in Fig. 8 und Fig. 9 in der Richtung tangential zur Bewegungsrichtung B. In beiden Winkelstellungen liegen die Sensorflächen 4, 6 in einer Ebene. Sie werden durch die Drehachsen 7 um eine Axialrichtung A der Welle 13 verschwenkt.

In den Fig. 8 und 9 weist der Abtastkopf 1 keine Fixiereinrichtung auf, mit der die Winkelstellung fixiert werden kann. Die beiden Sensoreinrichtungen könnten aber beispielsweise über eine Halteeinrichtung gehalten werden. So könnte etwa ein plastisch verformbares Element wie ein Blech zwischen den beiden Sensoreinrichtungen angeordnet sein, um die beiden Sensorelemente zu halten. Alternativ könnte beispielsweise die Winkelstellung durch Vergießen mit einem aushärtbaren Harz oder durch einen Kleber fixiert werden.

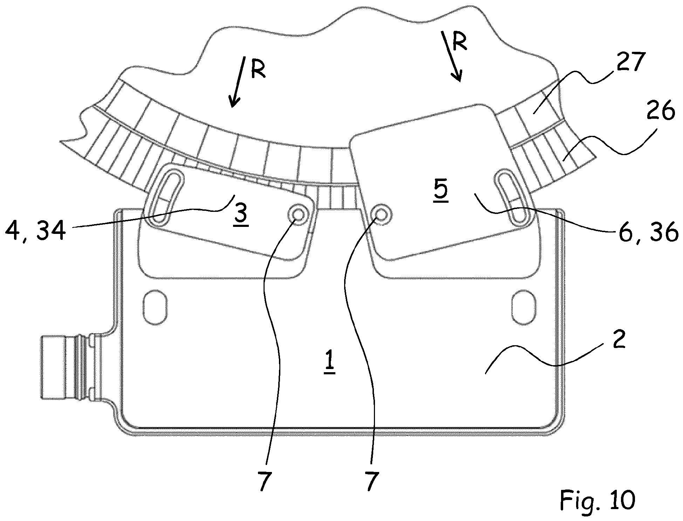

In Fig. 10 ist eine weitere vorteilhafte Ausgestaltung eines Abtastkopfes 1 dargestellt. Die erste Sensoreinrichtung 3 tastet eine fein aufgelöste Maßverkörperung 26 ab. Die zweite Sensoreinrichtung 5 tastet die fein aufgelöste Maßverkörperung 26 und eine grob aufgelöste Maßverkörperung 27 ab. Dazu ist sie in der Radialrichtung R gemessen breiter als die erste Sensoreinrichtung 3. Sie kann eine breite oder zwei schmalere Sensorflächen aufweisen.

Zusätzlich zu den in den Figuren gezeigten zwei Sensoreinrichtungen 3, 5 können noch weitere Sensoreinrichtungen vorhanden sein. Beispielsweise kann eine dritte Sensoreinrichtung vorhanden sein, die relativ zum Rest des Abtastkopfes unbeweglich ist. Diese könnte sich beispielsweise zwischen den beiden Sensorflächen 4, 6 befinden.

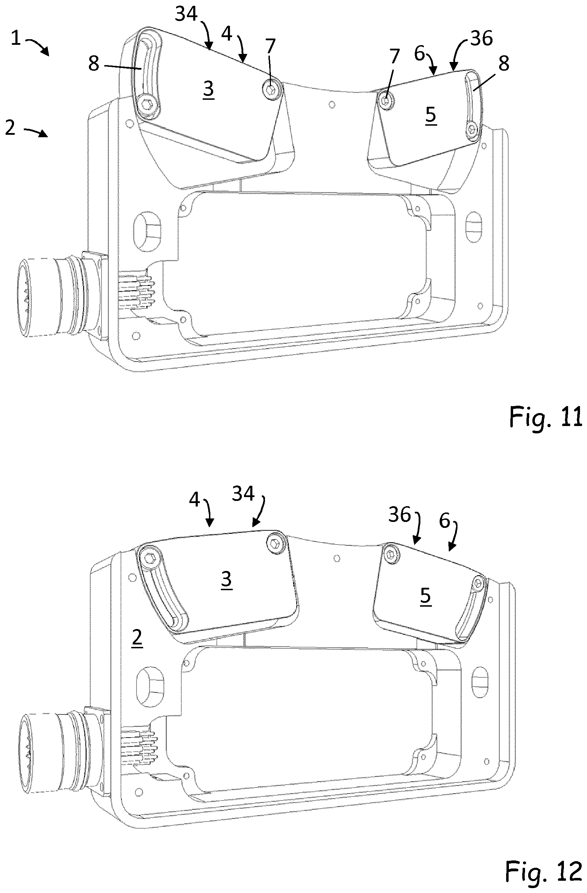

In Fig. 11 ist ein weiterer Abtastkopf 1 gezeigt. Er umfasst wieder eine erste Sensoreinrichtung 3 mit einer ersten Sensorfläche 4 und eine zweite Sensoreinrichtung 5 mit einer zweiten Sensorfläche 6. Die Sensoreinrichtungen 3, 5 sind jeweils über eine Achse 7 mit dem Gehäuse 2 verbunden. Ferner erlauben die schlitzförmigen Ausnehmungen 8, die außen an den Sensoreinrichtungen 3, 5 angebracht sind, eine Anordnung der beiden Sensoreinrichtungen 3, 5 in verschiedenen Winkelstellungen zueinander, so dass zum Beispiel verschieden große Wellen innen und außen abgetastet werden können. Die Sensoreinrichtungen 3, 5 sind also um die Drehachsen 7 dreh-/schwenkbar. Die Drehachsen 7 der Sensoreinrichtungen 3, 5 befinden sich an den die Sensorflächen 4, 6 bildenden Seiten 34, 36.

In Fig. 12 ist ein Abtastkopf 1 gezeigt, wobei dieser auf eine Innenabtastung einer Hohlwelle eingestellt ist. Die beiden Sensorflächen 4, 6 haben also eine andere Winkelstellung zueinander als in Fig. 11. Die beiden Sensorflächen 4, 6 weisen in Fig. 12 voneinander weg, während sie in Fig. 11 eher aufeinander zu weisen.

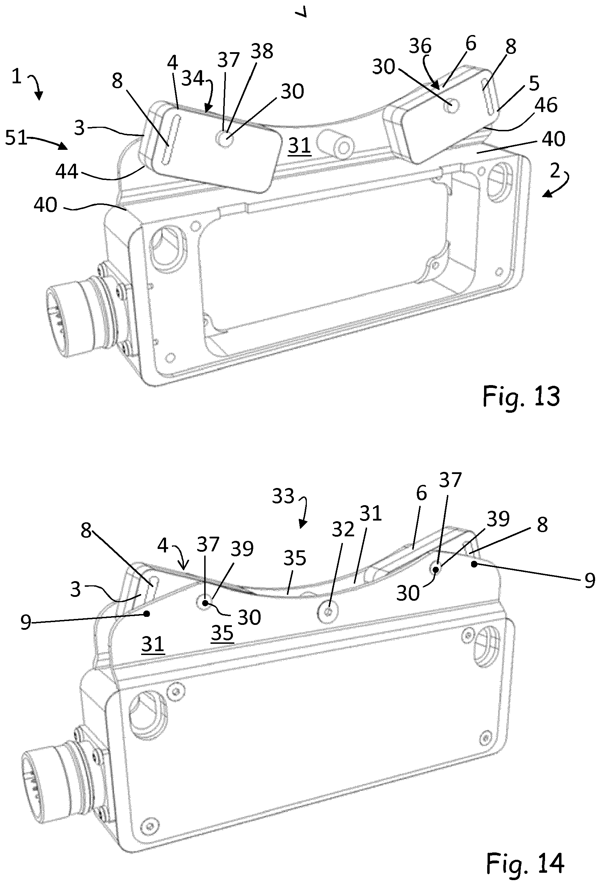

In Fig. 13 ist ein Abtastkopf 1 mit einem Gehäuse 2, bei dem Teile entfernt sind, dargestellt. Der Abtastkopf 1 umfasst wieder eine erste Sensoreinrichtung 3 mit einer ersten Sensorfläche 4 und eine zweite Sensoreinrichtung 5 mit einer zweiten Sensorfläche 6. Die erste Sensorfläche 4 und die zweite Sensorfläche 6 weisen zumindest teilweise in dieselbe Richtung wie eine Stirnfläche 40 des Gehäuses 2, d.h. die Normalenrichtungen der Sensorflächen 4 und 6 weisen Komponenten auf, die parallel zur Oberflächennormale der Stirnseite 40 sind. Die beiden Sensorflächen 4, 6 und die Stirnseite 40 weisen jeweils vom Gehäuse 2 aus nach außen. Die Sensorflächen 4, 6 sind der Stirnseite 40 dabei vorgelagert. Sie befinden sich weiter außen als die Stirnseite 40. Die Sensoreinrichtungen 3, 5 befinden sich zwischen den Sensorflächen 4, 6 und der Stirnseite 40. Dadurch ist eine schmale Ausgestaltung im Bereich der Sensorflächen 4, 6 möglich, da die Sensoreinrichtungen 3, 5 außerhalb des Gehäuses 2 liegen und dadurch die Breite des Abtastkopfes 1, gemessen entlang einer Breitenrichtung W im Bereich der Sensorflächen 4, 6 kleiner sein kann als im Bereich des Gehäuses 2. Dies erlaubt eine größere Toleranz im vorderen/äußeren Bereich 51. Beispielsweise können dadurch Bewegungen oder Lage-/Längenänderungen des zu messenden Bauelementes, die beispielsweise aufgrund von temperaturabhängigen Ausdehnungen entstehen, besser toleriert werden.

Die Sensoreinrichtungen 3, 5 sind jeweils um Drehachsen 30 drehbar, die durch Achsen 37 verlaufen. Die Achsen 37 werden von Vorsprüngen 38 an den Sensoreinrichtungen 3, 5 gebildet, die in Löchern 39 an den seitlichen Blechen 31 angeordnet sind (siehe Fig. 14). Die Drehachsen 30 befinden sich an den die Sensorflächen 4, 6 bildenden Seiten 34, 36 der Sensoreinrichtungen 3, 5. Die Drehachsen 30 befinden sich also näher an den die Sensorflächen 4, 6 bildenden Seiten 34, 36 der Sensoreinrichtungen 3, 5 als an den Sensorflächen 4, 6 gegenüberliegenden Seiten 44, 46. Insbesondere befinden sie sich mittig bezüglich der Sensorflächen 4, 6. Aufgrund dieser Ausgestaltung ist eine Änderung des Abstandes der Sensorflächen 4, 6 zueinander bei einer Veränderung der Winkelstellung zueinander minimiert.

Auch die Tatsache, dass die Drehachsen 30 außerhalb des Gehäuses, insbesondere vor der Stirnseite 40 des Gehäuses 2 liegen, trägt dazu bei, dass die Anpassung an verschiedene Wellendurchmesser besonders einfach ist.

Die Sensoreinrichtungen 3, 5 sind jeweils als separate Bauelemente ausgebildet und befinden sich vollständig vor der Stirnseite 40 des Gehäuses 2.

In Fig. 14 ist der Abtastkopf aus Fig. 13 im vollständig montierten Zustand, d.h. ohne die in Fig. 13 fehlenden Teile dargestellt.

Die beiden Sensoreinrichtungen 3, 5 sind hier wieder zur Außenabtastung einer Welle eingestellt. Sie weisen aufeinander zu.

Die beiden Sensoreinrichtungen 3, 5 sind zwischen zwei seitlichen Blechen 31 angebracht, die zusammen mit einer anziehbaren Schraube 32 als Feststelleinrichtung 33 dienen, mit der die Winkelstellungen der beiden Sensoreinrichtungen 3, 5 gleichzeitig fixierbar sind. Die hier gezeigte Feststelleinrichtung 33 ist also einhändig bedienbar. Die beiden seitlichen Bleche 31 wirken als Klemmelemente 35, zwischen denen die Sensoreinrichtungen 3, 5 angeordnet sind und mit dem die Sensoreinrichtungen 3, 5 geklemmt werden können.

Die Löcher 39, die die Achsen 37 aufnehmen und damit als Lager für eine Drehung der Achsen 7 um die Drehachse 30 dienen, sind an den äußeren Enden der seitlichen Bleche 31 angeordnet. In diesem Bereich ragen die seitlichen Bleche 31 bezüglich einer Höhenrichtung H am weitesten vom Gehäuse 2 hervor. Zwischen den Löchern 39 weisen die seitlichen Bleche 31 eine konkave Form auf, um bei einer Außenabtastung die Welle möglichst gut aufnehmen zu können. Seitlich nach außen hin ragen die Bleche 31 weniger weit vom Gehäuse 2 ab, um bei einer Innenabtastung einer Hohlwelle eine möglichst nahe Platzierung des Abtastkopfes 1 an der inneren Oberfläche der Hohlwelle zu ermöglichen.

Die Sensoreinrichtungen 3, 5 können zusätzlich durch eine schlitzförmig Ausnehmung 8 geführt werden. Alternativ oder zusätzlich zur als Feststelleinrichtung 33 dienenden anziehbaren Schraube 32 kann jeweils eine Fixiereinrichtung 9 zur Fixierung der Sensoreinrichtungen 3, 5 vorgesehen sein. Im einfachsten Fall ist die Fixiereinrichtung 9 als eine anziehbare Schraube ausgeführt.

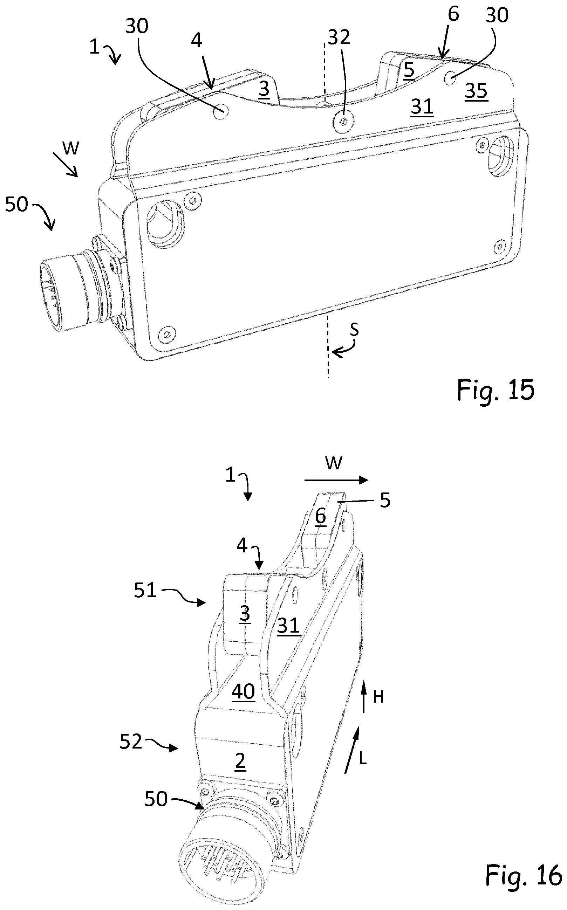

In Fig. 15 ist eine Einstellung der Sensoreinrichtungen 3, 5 dargestellt, mit der eine Innenabtastung einer Hohlwelle möglich ist. Die Sensorflächen 4, 6 weisen dabei voneinander weg.

Um einen möglichst sicheren Halt der Sensoreinrichtungen 3, 5 zu gewährleisten, können die Sensoreinrichtungen 3, 5 und/oder die Klemmelemente 35 Aufrauungen, Riffelungen oder Beschichtungen mit einem hohen Reibungskoeffizienten aufweisen.

Wie auch die anderen Abtastköpfe 1, weist der Abtastkopf 1 aus Fig. 15, abgesehen von einem elektrischen Anschlusselement 50, eine zweizählige Rotationssymmetrie auf. Eine Rotation um eine Symmetrieachse S um 180° bildet den Abtastkopf 1 wieder auf sich selbst ab. Die Sensoreinrichtungen 3, 5 werden dabei vertauscht, d.h. sie wechseln ihre Plätze. Die Symmetrieachse S verläuft dabei mittig durch den Abtastkopf 1 und durch die anziehbare Schraube 32. Sie verläuft von einer Seite, die der Welle zugewandt ist, zu einer Seite, die der Welle abgewandt ist, wenn der Abtastkopf 1 zur Messung an der Welle angebracht ist. Eine solche symmetrische Ausgestaltung führt dazu, dass der Abtastkopf in zwei verschiedenen Orientierungen montiert werden kann und der Monteur bei der Montage nicht mehr auf die korrekte Orientierung achten muss. Nichtsdestotrotz muss natürlich die Auswertesoftware, die die vom Abtastkopf 1 kommenden Signale auswertet, so ausgestaltet sein, dass sie verschiedene Montageorientierungen toleriert.

Eine in einem äußeren Bereich 51 gemessene Dicke D1 des Abtastkopfes 1, die in einer Breitenrichtung W gemessen wird, ist kleiner als eine in einem inneren Bereich 52 gemessene Dicke D2 des Abtastkopfes 1. Der äußeren Bereich 51 liegt dabei auf der Seite, auf der die Sensoreinrichtungen 3, 5 liegen.

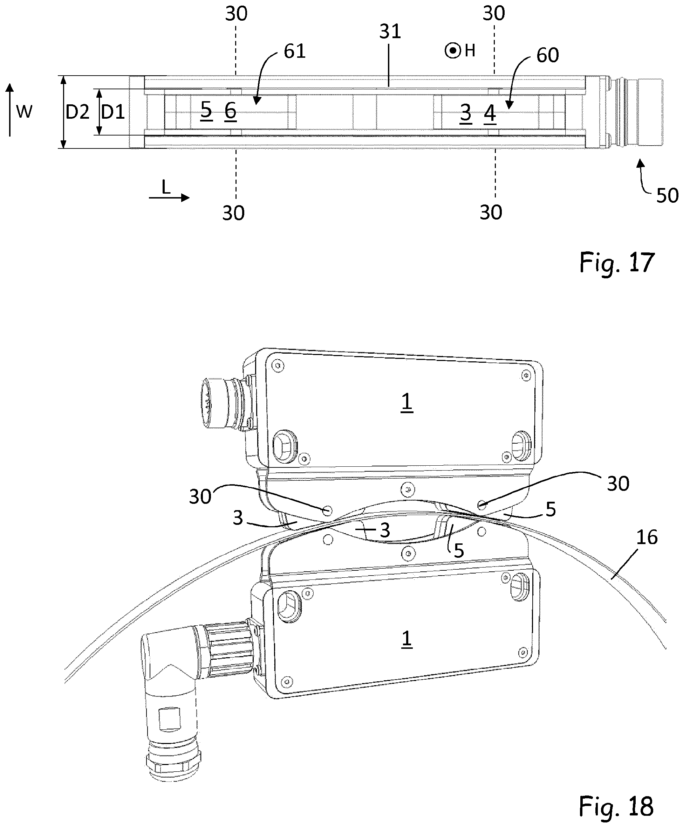

In Fig. 17 ist die schmalere Ausgestaltung am äußeren Bereich 51 in einer Draufsicht gut zu erkennen. Die Draufsicht zeigt dabei die Ansicht entlang einer Höhenrichtung H, wobei die Höhenrichtung H senkrecht zur Längsrichtung L und senkrecht zur Breitenrichtung W verläuft. In der Breitenrichtung W hat der Abtastkopf 1 eine geringere Ausdehnung als in der Längsrichtung L und als in der Höhenrichtung H.

Zu erkennen ist in Fig. 17 auch, dass sich der Abstand der Mittenbereiche 60, 61 der Sensorflächen 4, 6 bei einer Drehung der Sensoreinrichtungen 3, 5 um die Drehachsen 30 kaum verändert.

In Fig. 18 sind zwei Abtastköpfe 1 gezeigt, wobei ein Abtastkopf 1 eine Maßverkörperung 16 außen abtastet und der andere Abtastkopf 1 die Maßverkörperung 16 innen abtastet. Dies zeigt, dass der gleiche Abtastkopf 1 durch Rotation der Sensoreinrichtungen 3, 5 zur Abtastung sowohl von innen, als auch von außen nutzbar ist.

Zusätzlich zu der zweizähligen Rotationssymmetrie um die Achse S, die durch die in der Mitte 72 angeordnete Schraube 75 entlang der Höhenrichtung H verläuft, weist der Abtastkopf 1, wie auch die anderen Abtastköpfe, eine Spiegelsymmetrie bezüglich einer Ebene, die parallel zu der durch die Höhenrichtung H und die Längsrichtung L definierte Ebene verläuft und mittig durch das Gehäuse geht. Dadurch wird erreicht, dass bei einer Rotation um die Längsrichtung L, wie sie beispielsweise bei den zwei Abtastköpfen in Fig. 18 stattgefunden hat, kein Versatz der Sensoreinrichtungen 3, 5 entlang der Breitenrichtung W auftritt.

Zusätzlich zu den in den Figuren gezeigten zwei Sensoreinrichtungen 3, 5 können noch weitere Sensoreinrichtungen vorhanden sein. Beispielsweise kann eine dritte Sensoreinrichtung vorhanden sein, die relativ zum Rest des Abtastkopfes unbeweglich ist. Diese könnte sich beispielsweise zwischen den beiden Sensorflächen 4, 6 befinden.

Insgesamt betrachtet ermöglicht der erfindungsgemässe Abtastkopf durch seinen Aufbau auf technisch einfache Art und Weise eine Anpassung an unterschiedliche Wellendurchmesser.

## Patentansprüche

1. Abtastkopf (1) für einen Geber zur Erfassung von Rotations- oder Linearparametern, eines drehbaren oder linear bewegbaren Bauelementes, insbesondere einer Welle (13), umfassend ein Gehäuse (2), eine erste, am Gehäuse (2) angeordnete Sensoreinrichtung (3) mit einer ersten Sensorfläche (4), und eine zweite, am Gehäuse (2) angeordnete, in einer Umfangsrichtung (U) des drehbaren Bauelementes bzw. in einer Längsrichtung des linear bewegbaren Bauelementes zur ersten Sensoreinrichtung (3) versetzt angeordnete Sensoreinrichtung (5) mit einer zweiten Sensorfläche (6), wobei die Sensoreinrichtungen (3, 5) jeweils um eine Drehachse (7, 30) drehbar sind so dass die Sensorflächen (4, 6) in mindestens zwei unterschiedlichen Winkelstellungen zueinander schwenkbar sind, **dadurch gekennzeichnet, dass** sich die Drehachsen (7, 30) der Sensoreinrichtungen (3, 5) an den die Sensorflächen (4, 6) bildenden Seiten (34, 36) der Sensoreinrichtungen (3, 5) befinden.

2. Abtastkopf (1) nach Anspruch 1, **dadurch gekennzeichnet, dass** die Drehachsen (7, 30) innerhalb des Gehäuses (2) liegen.

3. Abtastkopf (1) nach Anspruch 1, **dadurch gekennzeichnet, dass** das Gehäuse (2) eine Stirnseite (40) umfasst, wobei die Sensorflächen (4, 6) zumindest teilweise in dieselbe Richtung weisen wie die Stirnseite (40) und der Stirnseite (40) vorgelagert sind, wobei sich die Sensoreinrichtungen (3, 5) zwischen den Sensorflächen (4, 6) und der Stirnseite (40) befinden.

4. Abtastkopf (1) nach Anspruch 3, **dadurch gekennzeichnet, dass** die Drehachsen (30) außerhalb des Gehäuses (2) liegen.

5. Abtastkopf (1) nach Anspruch 3, **dadurch gekennzeichnet, dass** die Drehachsen (7, 30) an oder vor der Stirnseite (40) des Gehäuses (2) liegen.

6. Abtastkopf (1) nach einem der vorhergehenden Ansprüche, **dadurch gekennzeichnet, dass** jeweils eine schlitzförmige Ausnehmung (8) an den Sensoreinrichtungen (3, 5) vorgesehen ist, so dass die Sensoreinrichtungen (3, 5) innerhalb eines kontinuierlichen Bereichs schwenkbar sind.

7. Abtastkopf (1) nach Anspruch 6, **dadurch gekennzeichnet, dass** jede der beiden Sensoreinrichtungen (3, 5) über eine Fixiereinrichtung (9) verfügt, die eine Fixierung der ersten und/oder der zweiten Sensoreinrichtung (3, 5) in den mindestens zwei unterschiedlichen Winkelstellungen der Sensorflächen (4, 6) zueinander ermöglicht.

8. Abtastkopf (1) nach Anspruch 7, **dadurch gekennzeichnet, dass** die Fixiereinrichtung (9) ausgeführt ist, durch die schlitzförmige Ausnehmung (8) zu ragen und die Sensoreinrichtungen (3, 5) fixiert.

9. Abtastkopf (1) nach einem der vorhergehenden Ansprüche, **dadurch gekennzeichnet, dass** eine auf die beiden Sensoreinrichtungen (3, 5) gleichzeitig einwirkende Feststelleinrichtung (33) vorhanden ist, durch die die Winkelstellungen der beiden Sensoreinrichtungen (3, 5) fixierbar sind.

10. Abtastkopf (1) nach einem der vorhergehenden Ansprüche, **dadurch gekennzeichnet, dass** die erste und die zweite Sensorfläche (4, 6) unabhängig voneinander schwenkbar sind.

11. Abtastkopf (1) nach einem der Ansprüche 1 bis 9, **dadurch gekennzeichnet, dass** die erste und die zweite Sensorfläche (4, 6) schwenkbar miteinander gekoppelt sind.

12. Abtastkopf (1) nach einem der vorhergehenden Ansprüche, **dadurch gekennzeichnet, dass** die Sensorflächen (4, 6) der Stirnfläche (25) des drehbaren Bauelementes (13) gegenüberliegend angeordnet sind und von den Sensorflächen (4, 6) eine an der Stirnfläche (25) vorgesehene Massverkörperung (16, 26, 27) erfassbar ist.

13. Abtastkopf (1) nach Anspruch 12, **dadurch gekennzeichnet, dass** die zweite Sensoreinrichtung (5) in der Radialrichtung R gemessen breiter als die erste Sensoreinrichtung (3) ausgeführt ist.

14. Abtastkopf (1) nach einem der vorhergehenden Ansprüche, **dadurch gekennzeichnet, dass** die Sensoreinrichtungen (3, 5) kontaktlos messende, insbesondere magnetisch oder induktiv messende Sensoreinrichtungen (3, 5) sind.

15. Abtastkopf (1) nach einem der vorhergehenden Ansprüche, **dadurch gekennzeichnet, dass** eine dritte Sensoreinrichtung mit einer dritten Sensorfläche vorgesehen ist, wobei die dritte Sensorfläche nicht bewegbar am Gehäuse angeordnet ist.

## Claims

1. Sensor head (1) for an encoder for detecting the rotational or linear parameters of a rotary or linear moving component part, in particular of a shaft (13), comprising a housing (2), a first sensor device (3) located on the housing (2) with a first sensor surface (4), and a second sensor device (5) located on the housing (2) and moving in a circumferential direction (U) of the rotating component part or in a longitudinal direction of the linear moving component part, offset with respect to the first sensor device (3), with a second sensor surface (6), whereby the sensor devices (3, 5) can each be rotated around an axis of rotation (7, 30) so that the sensor surfaces (4, 6) can be swiveled with respect to each other in at least two different angle positions, **characterized in that** the axes of rotation (7, 30) of the sensor devices (3, 5) are located on the sides (34, 36) of the sensor devices (3, 5) forming the sensor surfaces (4, 6).

2. Sensor head (1) in accordance with Claim 1, **characterized in that** the axes of rotation (7, 30) are located inside the housing (2).

3. Sensor head (1) in accordance with Claim 1, **characterized in that** the housing (2) comprises a front face (40), whereby the sensor surfaces (4, 6) at least partly face in the same direction as the front face (40) and project in front of the front face (40), with the sensor devices (3, 5) being located between the sensor surfaces (4, 6) and the front face (40).

4. Sensor head (1) in accordance with Claim 3, **characterized in that** the axes of rotation (30) are located outside the housing (2).

5. Sensor head (1) in accordance with Claim 3, **characterized in that** the axes of rotation (7, 30) are located at or in front of the front face (40) of the housing (2).

6. Sensor head (1) in accordance with one of the above Claims, **characterized in that** each of the sensor devices (3, 5) has a slotted recess (8), so that the sensor devices (3, 5) can be swiveled within a continuous range.

7. Sensor head (1) in accordance with Claim 6, **characterized in that** each of the two sensor devices (3, 5) has a fixing device (9) which allows the first and/or the second sensor device (3, 5) to be fixed in the at least two different angle positions of the sensor surfaces (4, 6) with respect to each other.

8. Sensor head (1) in accordance with Claim 7, **characterized in that** the fixing device (9) is designed to project through the slotted recess (8) and fixes the sensor devices (3, 5) in position.

9. Sensor head (1) in accordance with one of the above Claims, **characterized in that** there is a locking device (33) acting simultaneously on the two sensor devices (3, 5), by means of which the angle positions of the two sensor devices (3, 5) can be fixed.

10. Sensor head (1) in accordance with one of the above Claims, **characterized in that** the first and second sensor surfaces (4, 6) can be swiveled independently of each other.

11. Sensor head (1) in accordance with one of the Claims 1 to 9, **characterized in that** the first and second sensor surfaces (4, 6) are coupled to each other in such a way that they can be swiveled.

12. Sensor head (1) in accordance with one of the above Claims, **characterized in that** the sensor surfaces (4, 6) are located opposite the front surface (25) of the rotatable component part (13) and that a dimensional scale (16, 26, 27) provided on the front surface (25) can be detected by the sensor surfaces (4, 6).

13. Sensor head (1) in accordance with Claim 12, **characterized in that** the second sensor device (5) as measured in the radial direction R is wider than the first sensor device (3).

14. Sensor head (1) in accordance with one of the above Claims, **characterized in that** the sensor devices (3, 5) are contactlessly measuring, in particular magnetically or inductively measuring, sensor devices (3, 5).

15. Sensor head (1) in accordance with one of the above Claims, **characterized in that** a third sensor device with a third sensor surface is provided for, whereby the third sensor surface is immovably located on the housing.

## Revendications

1. Tête de détection (1) pour un codeur destiné à détecter des paramètres de rotation ou linéaires, d'un composant rotatif ou à déplacement linéaire, en particulier d'un axe (13), comprenant un boîtier (2), un premier dispositif de détecteur (3) disposé sur le boîtier (2) avec une première surface de détecteur (4), et un deuxième dispositif de détecteur (5) disposé sur le boîtier (2), dans une direction circonférentielle (U) du composant rotatif ou décalé dans le sens longitudinal du composant à déplacement linéaire par rapport au premier dispositif de détecteur (3) avec une deuxième surface de détecteur (6), les dispositifs de détecteur (3, 5) pouvant chacun être mis en rotation autour d'un axe de rotation (7, 30) de sorte que les surfaces de détecteur (4, 6) peuvent être orientées dans au moins deux positions angulaires différentes l'une par rapport à l'autre, **caractérisée en ce que** les axes de rotation (7, 30) des dispositifs de détecteur (3, 5) se trouvent sur les côtés (34, 36) formant les surfaces de détecteur (4, 6) des dispositifs de détecteur (3, 5).

2. Tête de détection (1) selon la revendication 1, **caractérisée en ce que** les axes de rotation (7, 30) se trouvent à l'intérieur du boîtier (2).

3. Tête de détection (1) selon la revendication 1, **caractérisée en ce que** le boîtier (2) comprend une face avant (40), les surfaces de détecteur (4, 6) étant disposées au moins partiellement dans les mêmes directions que la face avant (40) et la face avant (40), les dispositifs de détecteur (3, 5) se trouvant entre les surfaces de détecteur (4, 6) et la face avant (40).

4. Tête de détection (1) selon la revendication 3, **caractérisée en ce que** les axes de rotation (30) se trouvent à l'extérieur du boîtier (2).

5. Tête de détection (1) selon la revendication 3, **caractérisée en ce que** les axes de rotation (7, 30) se trouvent sur ou devant la face avant (40) du boîtier (2).

6. Tête de détection (1) selon l'une des revendications précédentes, **caractérisée en ce que** les dispositifs de détecteur (3, 5) présentent chacun un évidement en forme de fente (8), de telle sorte que les dispositifs de détecteur (3, 5) sont orientables dans un espace continu.

7. Tête de détection (1) selon la revendication 6, **caractérisée en ce que** chacun des deux dispositifs de détecteur (3, 5) dispose d'un dispositif de fixation (9), qui permet une fixation du premier et/ou du deuxième dispositif de détecteur (3, 5) dans les au moins deux positions angulaires différentes des surfaces de détecteur (4, 6) l'un par rapport à l'autre.

8. Tête de détection (1) selon la revendication 7, **caractérisée en ce que** le dispositif de fixation (9) est fixé pour faire saillie à travers l'évidement en forme de fente (8) et fixe les dispositifs de détecteur (3, 5).

9. Tête de détection (1) selon l'une des revendications précédentes, **caractérisée en ce qu'**un dispositif de blocage (33) agit simultanément sur les deux dispositifs de détecteur (3, 5) et permet de fixer les positions angulaires des deux dispositifs de détecteur (3, 5).

10. Tête de détection (1) selon l'une des revendications précédentes, **caractérisée en ce que** les première et deuxième surfaces de détecteur (4, 6) sont orientables indépendamment l'une de l'autre.

11. Tête de détection (1) selon l'une des revendications 1 à 9, **caractérisée en ce que** les première et deuxième surfaces de détecteur (4, 6) sont accouplées l'une à l'autre de manière orientable.

12. Tête de détection (1) selon l'une des revendications précédentes, **caractérisée en ce que** les surfaces de détecteur (4, 6) de la face avant (25) du composant rotatif (13) sont disposées à l'opposé l'une de l'autre et les surfaces de détecteur (4, 6) peuvent détecter un étalon de mesure (16, 26, 27) prévu sur la surface avant (25).

13. Tête de détection (1) selon la revendication 12, **caractérisée en ce que** le deuxième dispositif de détecteur (5) est plus large dans la direction radiale R que le premier dispositif de détecteur (3).

14. Tête de détection (1) selon l'une des revendications précédentes, **caractérisée en ce que** les dispositifs de détecteur (3, 5) sont des dispositifs de détecteur (3, 5) de mesure sans contact, en particulier de mesure magnétique ou inductive.

15. Tête de détection (1) selon l'une des revendications précédentes, **caractérisée en ce qu'**un troisième dispositif de détecteur est prévu avec une troisième surface de détecteur, la troisième surface de détecteur étant disposée sur le boîtier de manière immobile.
